# EUROPÄISCHE PATENTANMELDUNG

(11) **EP 4 843 925 A1**
(43) Veröffentlichungstag der Anmeldung: **25.11.2026**
(21) Anmeldenummer: 26180305.0
(22) Anmeldetag: 21.05.2026
(51) Int. Cl.: B65G 1/14

(54) **STAPELSÄULE ZUR AUFNAHME VON LAGERTEILEN AUF EINER STAPELKLINKE**

(30) Priorität: 21.05.2025 DE 102025119700
(71) Anmelder: MTS Maschinenbau GmbH, 88512 Mengen (DE)
(72) Erfinder: Laible, Eckhard, 71144 Leinfelden-Schlechtenmühle (DE)
(74) Vertreter: Patentanwälte und Rechtsanwalt Weiß, Arat & Partner mbB

(57) **Zusammenfassung**

Die Erfindung betrifft eine Stapelsäule zur Aufnahme von Lagerteilen auf einer Stapelklinke (1), wobei ein Grundkörper (2) aus zwei Seitenwangen (3, 4) besteht, die über eine Rückwand (5) miteinander verbunden sind, wobei die beiden Seitenwangen (3, 4) mit der Rückwand (5) eine Rinnenform ausbilden, wobei zwischen den beiden Seitenwangen (3, 4) in der Rinnenform die Stapelklinken (1, 1.1, 1.2) übereinander schwenkbar angeordnet sind, wobei jeder der Stapelklinken (1, 1.1, 1.2) jeweils ein Achsbolzen (6) und ein Gestängebolzen (7) zugeordnet ist, wobei der Gestängebolzen (7) innerhalb zweier Bogen-Langlöcher (8) beweglich geführt ist, wobei die Bogen-Langlöcher (8) jeweils in eine der Seitenwangen (4) eingelassen sind, und der Achsbolzen (6) zwischen den beiden Seitenwangen (3, 4) und in Bohrungen (9) der Seitenwangen (3, 4) drehbar gelagert ist, wobei jede der Stapelklinken (1, 1.1, 1.2) aus einem Führungskorb (10) und einer Aufnahmezunge (11) besteht, wobei die Aufnahmezunge (11) ein Positionierblech (12) aufweist, welches von der Aufnahmezuge (11) der Stapelklinke (1, 1.1, 1.2) hin zu der funktionell weiteren Stapelklinke (1, 1.1, 1.2) hinweist, wobei das Positionierblech (12) in Bereitschaftsstellung und/oder Arbeitsstellung aus den beiden Seitenwangen (3, 4) auf der Aufnahmezunge (11) herausragt.

## Beschreibung

### Technisches Gebiet

Die Erfindung betrifft eine Stapelsäule zur Aufnahme von Lagerteilen auf einer Stapelklinke nach dem Oberbegriff des Anspruchs 1.

### Stand der Technik

Derartige Stapelsäulen dienen insbesondere in der Automobilindustrie dazu, Blechteile, die aus einer Formanlage kommen und zur Weiterverarbeitung transportiert werden müssen, zwischenzulagern.

In diesem Zusammenhang wird auf die DE 93 18 410 U1 hingewiesen. Dort ist eine Stapelsäule offenbart, bei der die Klinkenhebel mit Federmitteln versehen sind, die sie unbelastet aus ihrer Abstütz- in ihre Fang- bzw. in ihre Ruhestellung überführen, wobei als Drehanschlag für die Haltearme der Klinkenhebel in der Arretierstellung im Turmkörper quer verlaufende Anschlagzapfen vorgesehen sind, und daß die Klinkenhebel untereinander gleichartig sind und daß der Tragarm und der Haltearm von gleicher Breite sind und miteinander fluchten. Nachteilig an den Anschlagzapfen ist aber, dass die im Profil kreisrunden Anschlagzapfen bei hohen Gewichten und den beim Transport hinzutretenden Beschleunigungskräften in der Praxis immer wieder brechen, biegen oder zum Verbiegen der Klinkenhebel geführt haben.

Eine ähnliche Konstruktion zeigt auch die DE 29 30 053 A1. Dort kommen ebenfalls kreisrunde Lagerbolzen zum Einsatz, die tatsächlich sogar nur nach Bedarf in entsprechende Seitenwandungen geschoben werden, um eine Unterstützung zu liefern, und zwar ebenfalls nur im rückwärtigen Bereich der Klinke. Auch hier führen hohe Gewichte zu den oben beschriebenen Nachteilen.

Weiter wird auf die DE 298 08 971 U1 verwiesen, die ein stoßabsorbierendes und elastisches Material aus Kunststoff oder Gummi an den Klinkenhebeln selbst vorsieht, um jeweils die entstehenden Kräfte aufnehmen zu können. Dies ist bei Schwerlastgütern von mehreren hundert Kilo bis hin zu mehreren Tonnen an Gewicht nicht realisierbar, da die Menge an stoßabsorbierendem Material aus Kunststoff oder Gummi viel zu groß wäre, um tatsächlich ein solch schweres Ladegut beispielsweise für einen Transport zu sichern.

Dabei gibt es senkrechte Stapelsäulen aber auch waagrechte oder schräge, die gleichfalls der vorliegenden Erfindung unterliegen sollen.

Für das Bestücken derartiger Stapelsäulen haben sich Klinken als sehr praktikabel erwiesen, die so miteinander verbunden sind, dass sie beim Befüllen der Stapelsäule bzw. eines Gestells mit diesen Stapelsäulen aus einer Ruhelage in eine Arbeitslage bewegt werden. Dies beginnt meist durch das Belegen der untersten Klinke mit einem Werkstück, welches die unterste Klinke damit in Arbeitslage dreht. Durch dieses Drehen nimmt die unterste Klinke die nächstfolgende Klinke in eine Bereitschaftsstellung, in der diese das nächste Lagergut aufnehmen kann. Durch die Aufnahme des nächsten Lagerguts wird wiederum die nachfolgende Klinke in Bereitschaftsstellung gedreht. Ausserhalb der Bereitschaftsstellung und der Arbeitslage befinden sich die Klinken in Ruhelage zwischen beispielsweise zwei Seitenwangen der Stapelsäule.

Eine derartige Stapelsäule ist beispielsweise in der DE 20 2020 104 669 U1 beschrieben.

### Aufgabe der Erfindung

Die Aufgabe der vorliegenden Erfindung ist es, die Nachteile aus dem Stand der Technik zu überwinden. Insbesondere soll eine Stapelsäule bereitgestellt werden, die möglichst viele Lagerteile in einer einzigen Stapelsäule aufnehmen kann. Dabei sollen die für Beladung und Entladung notwendigen Spielräume in der Stapelsäule optimal genutzt werden.

### Lösung der Aufgabe

Zur Lösung der Aufgabe führen die Merkmale nach dem Anspruch 1.

Vorteilhafte Ausgestaltungen sind in den Unteransprüchen beschrieben.

Eine erfindungsgemäße Stapelsäule dient zur Aufnahme von Lagerteilen auf einer Stapelklinke, wobei ein Grundkörper aus zwei Seitenwangen besteht, die über eine Rückwand miteinander verbunden sind. Diese Seitenwangen sind maßgebliche Elemente der Konstruktion und dienen zur Stabilisierung der gesamten Stapelsäule. Die Verbindung über die Rückwand sorgt für eine erhöhte Steifigkeit und Festigkeit der Konstruktion, insbesondere wenn die Stapelsäule hohen Belastungen ausgesetzt ist. Die beiden Seitenwangen bilden mit der Rückwand eine Rinnenform aus, die speziell darauf ausgelegt ist, die Stapelklinken aufzunehmen. Diese Anordnung ermöglicht eine platzsparende und zugleich stabile Aufnahme mehrerer Stapelklinken, die übereinander schwenkbar angeordnet sind. Die Rinnenform bietet zusätzlich den Vorteil, dass die Stapelklinken sicher und geordnet geführt werden können, ohne dass ein Verhaken oder Verkanten auftritt.

Bei den Lagerteilen handelt es sich im bevorzugten Ausführungsbeispiel um Karosserieteile für Kraftfahrtzeuge oder Lastkraftwagen oder anderen sperrigen Bauteile oder dergleichen.

Die Stapelklinken bestehen jeweils aus einem Führungskorb und einer Aufnahmezunge. Der Führungskorb dient der stabilen Lagerung und Führung der Klinke innerhalb der Stapelsäule. Die Aufnahmezunge ist in ihrer Geometrie so gestaltet, dass sie eine sichere Aufnahme der Lagerteile ermöglicht. Durch die Kombination aus Führungskorb und Aufnahmezunge werden Zug- und Druckkräfte gleichmäßig verteilt. Dies stellt sicher, dass die Stapelklinken auch bei hohen Belastungen nicht verformen oder brechen.

Die Lagerteile werden in der Stapelklinke sicher aufgenommen, wodurch eine strukturierte Anordnung gewährleistet ist. Diese Strukturierung erleichtert die Be- und Entladung, da die Lagerteile leicht zugänglich bleiben. Darüber hinaus trägt die präzise Führung der Stapelklinken zur gleichmäßigen Lastverteilung bei, was die Beanspruchung einzelner Komponenten reduziert. Durch die Kombination aus Führungskorb und Aufnahmezunge wird eine optimierte Lastverteilung erreicht, die eine punktuelle Überbelastung verhindert und somit die Lebensdauer der Stapelklinken deutlich verlängert.

Die Stapelklinken werden nacheinander beladen. Dabei ist die Besonderheit gegeben, dass die erste beladene Stapelklinke bereits aus einer Bereitschaftsstellung startet. Sobald die erste Stapelklinke mit dem Lagerteil beladen wurde, wird aufgrund eines Gestänges die zweite Stapelklinke aus einer Ruhestellung in die Bereitschaftsstellung gezogen. Dabei verfährt die erste Stapelklinke aus der Bereitschaftsstellung in eine Arbeitsstellung. Sobald die zweite Stapelklinke beladen ist, wird die darauf funktional folgende dritte Stapelklinke aus der Ruhestellung in die Bereitschaftsstellung gezogen und die zweite Stapelklinke wird dadurch in ihre Arbeitsstellung gedrückt.

Die Stapelklinken bestehen, wie oben bereits ausgeführt, jeweils aus dem Führungskorb und der Aufnahmezunge. Der Führungskorb wiederum besteht aus einem Bodenbereich und zwei rechtwinklig daran angeordneten Flügeln. Diese Flügel sind jeweils mit einer Bohrung für einen Achsbolzen und einer weiteren Bohrung für einen Gestängebolzen ausgestattet.

Der Achsbolzen ist zwischen den beiden Seitenwangen und in Bohrungen der Seitenwangen drehbar gelagert. Um den Achsbolzen ist eine Rückstellfeder angeordnet, deren erstes Federbein gegen die Rückwand der Stapelsäule drückt. Das zweite Federbein der Feder ist so angeordnet, dass es den Gestängebolzen in eine Ruhestellung zurückdrückt.

Der Gestängebolzen ist wiederum innerhalb eines Bogen-Langlochs beweglich geführt, wobei das Boden-Langloch in eine der Seitenwände der Stapelsäule eingelassen ist. Das Gestänge greift ausserdem an dem Gestängebolzen an, um die oben beschriebene Funktionalität von ruhe-, Bereitschafts- und Arbeitsstellung zu erreichen. Auf diese Weise sind die Stapelklinken miteinander über den Gestängebolzen angreifend über das Gestänge wirkverbunden. Das Gestänge ermöglicht es, dass beim Erreichen der Arbeitsstellung der einen Stapelklinke die nächste Stapelklinke in die Bereitschaftsstellung versetzt wird. Sobald die nächste Stapelklinke ebenfalls in die Arbeitsstellung gelangt, wird die darauffolgende Stapelklinke in die Bereitschaftsstellung verschwenkt.

Die Aufnahmezunge der Stapelklinke ist mit einem Positionierblech versehen. Dieses Positionierblech zeigt von der Aufnahmezunge der Stapelklinke hin zu der funktionell weiteren Stapelklinke. In Bereitschaftsstellung und/oder Arbeitsstellung ragt das Positionierblech aus den beiden Seitenwangen der Stapelsäule heraus, wobei es auf der Aufnahmezunge der Stapelklinke angebracht ist. Die hat den Vorteil, dass ein Raum für das Lagerteil in der Arbeitsstellung der Stapelklinke verkleinert wird, als dies beim Beladen der Fall ist. Beim Beladen bedarf es beispielsweise eines Freiraums zwischen dem Lagerteil und dem Führungswinkel der Stapelsäule von 0,8 cm bis 1 cm, wohingegen in Arbeitsstellung ein Freiraum von 0,4 cm ausreicht. Dadurch können mehr Lagerteile übereinander in der gleichen Stapelsäule gelagert werden, als dies ohne das Positionierblech möglich wäre.

Das Positionierblech kann je nach Anforderung unterschiedlich angeordnet sein. Es kann auf der Aufnahmezunge hin zu dem Führungskorb geneigt angeordnet sein. Ebenso besteht die Möglichkeit, dass das Positionierblech von dem Führungskorb weg geneigt oder rechtwinklig auf der Aufnahmezunge angeordnet ist. Das bedeutet, dass das Positionierblech als Blechstreifen auf der Aufnahmezunge angeschweisst, angeschraubt oder vernietet sein kann. Es kann sich bei dem Positionierblech auch um ein aus der Stapelklinke an zwei bis drei Kanten ausgeschnittene und an der letzten Kante aufgefaltetes Metallteil handeln.

In einem anderen Ausführungsbeispiel kann das Positionierblech zudem einen Verbindungsstreifen zum Führungskorb ausbilden. Dieser Verbindungsstreifen ist im Führungskorb mit der Stapelklinke vernietet oder verschweißt. Obwohl auch andere Verbindungsarten denkbar sind, haben sich diese Verfahren als besonders praktikabel erwiesen. Durch den Verbindungsstreifen in den Führungskorb ist eine einfache und günstige Herstellung möglich.

In einem bevorzugten Ausführungsbeispiel ist der Verbindungsstreifen und das Positionierblech einstückig ausgebildet. In diesem Ausführungsbeispiel befindet sich eine Nietausnehmung in dem Verbindungsstreifen. In einem anderen Ausführungsbeispiel kann sich die Nietausnehmung über den Verbindungsstreifen und das Positionierblech erstrecken. Dann weisen der Verbindungsstreifen und das Positionierblech eine Nietausnehmung auf. Diese Nietausnehmung kann entweder am Verbindungsstreifen oder am Positionierblech selbst vorhanden sein. Vorzugsweise befindet sich die Nietausnehmung jedoch im Übergangsbereich zwischen Verbindungsstreifen und Positionierblech. Dies hat den Vorteil, dass ein Niet, der den Verbindungsstreifen des Positionierblechs im Führungskorb der weiteren angeordneten Stapelklinke durch den Führungskorb zu der zweiten Stapelklinke ragt und es in der Ruhestellung zu Problemen kommen kann, wenn der Niet der dritten Stapelklinke in die Ruhestellung der zweiten Stapelklinke ragt und dabei den Verbindungsstreifen/das Positionierblech ungewollt wegdrückt. Dies kann durch die Nietausnehmung verhindert werden, da in solch einem Fall der Niet der dritten Stapelklinke in die Nietausnehmung der zweiten Stapelklinke hineinfährt. Dadurch kann der Abstand zwischen den Stapelklinken verringert werden.

Das Positionierblech weist eine erste Breite auf, die größer ist als die Breite der Aufnahmezunge. Es bildet zwei Justagefinger aus, die die Aufnahmezunge flankieren und von der funktionell weiteren Stapelklinke weg zeigen.

Zumindest eine der Seitenwangen ist mit einem Führungswinkel ausgestattet, das rechtwinklig von der Seitenwange absteht. Das Positionierblech der Aufnahmezunge der Stapelklinken ragt in Bereitschaftsstellung und/oder Arbeitsstellung über die Längserstreckung dieses Führungswinkels hinaus. Auf diese Weise dient das Positionierblech als Begrenzung für das auf der Stapelklinke angeordnete Lagerteil. Als Längserstreckung ist die gedachte Verlängerung des Führungswinkels über die beiden Seitenwände der Stapelsäule definiert.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine geschnittene Seitenansicht einer Stapelsäule gemäss der vorliegenden Erfindung entlang der Linie I - I in Figur 3;
Figur 2 eine perspektivische Ansicht mehrerer übereinander angeordneter Stapelklinken; und
Figur 3 eine Draufsicht auf die Stapelsäule nach Figur 1.

### Ausführungsbeispiel

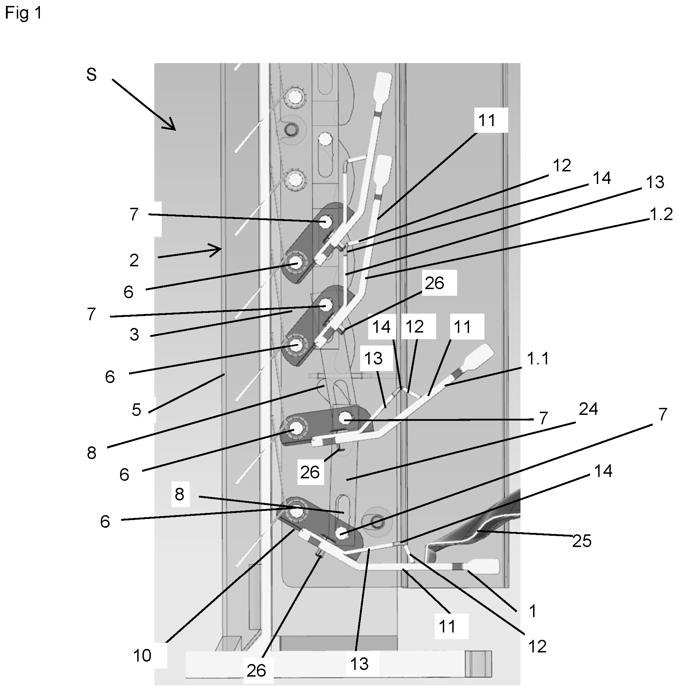

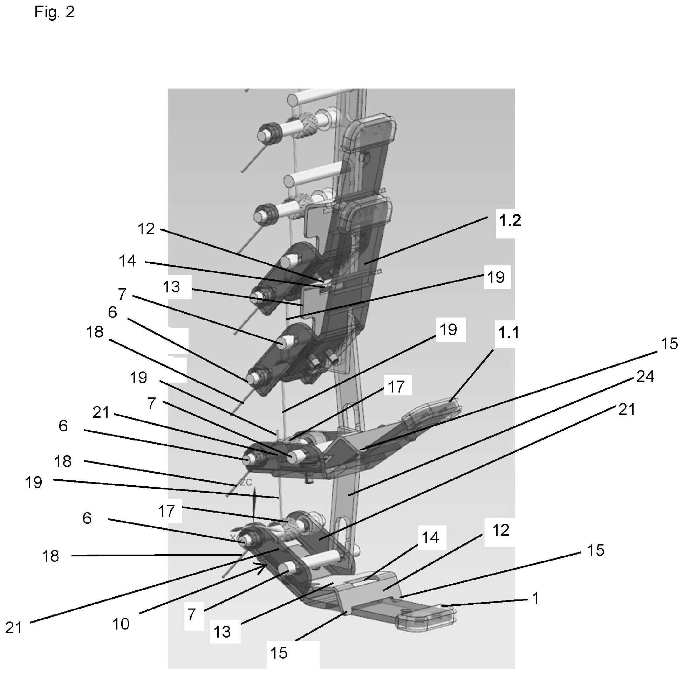

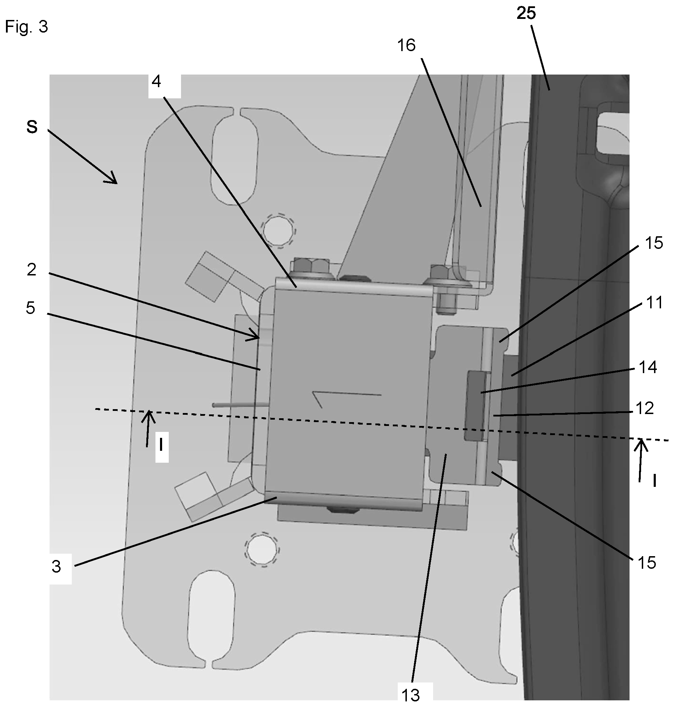

Gemäss den Figuren 1 bis 3 weist eine Stapelsäule S mehrere Stapelklinken 1, 1.1, 1.2 zur Aufnahme von Lagerteilen 25 auf. Die Stapelsäule S weist einen Grundkörper 2 auf, welcher aus zwei Seitenwangen 3, 4 besteht, die über eine Rückwand 5 miteinander verbunden sind. Die beiden Seitenwangen 3, 4 bilden mit der Rückwand 5 eine Rinnenform aus, wobei zwischen den beiden Seitenwangen 3, 4 in der Rinnenform die Stapelklinken 1, 1.1, 1.2 übereinander schwenkbar angeordnet sind.

Die Stapelklinken 1, 1.1, 1.2 bestehen jeweils aus einem Führungskorb 10 und einer Aufnahmezunge 11. Der Führungskorb 10 wiederum besteht aus einem Bodenbereich 20 und zwei rechtwinklig daran angeordneten Flügeln 21. Die Flügel 21 weisen jeweils eine Achsbolzen-Bohrung 22 für einen Achsbolzen 6 und eine Gestängebolzen-Bohrungen 23 für einen Gestängebolzen 7 auf.

Der Achsbolzen 6 ist zwischen den beiden Seitenwangen 3, 4 und in Bohrungen 9 der Seitenwangen 3, 4 drehbar gelagert. Um den Achsbolzen 6 ist eine Rückstellfeder 17 angeordnet, deren erstes Federbein 18 gegen die Rückwand 5 der Stapelsäule S drückt und deren zweites Federbein 19 den Gestängebolzen 7 zu einer Ruhestellung hindrückend angeordnet ist.

Der Gestängebolzen 7 wiederum ist innerhalb zweier Bogen-Langlöcher 8 beweglich geführt, die in der Seitenwange 4 bzw. in einem Gestänge 24 vorgesehen sind, so dass die Stapelklinken 1, 1.1, 1.2 miteinander an dem Gestängebolzen 7 angreifend über das Gestänge 24 wirkverbunden sind. Das Gestänge 24 wirkt derart, dass bei Erreichen einer Arbeitsstellung der einen Stapelklinke 1 die weitere Stapelklinke 1.1 in eine Bereitschaftsstellung gebracht wird. Sobald diese weitere Stapelklinke 1.1 ebenfalls in eine Arbeitsstellung gelangt, wird erneut die weitere Stapelklinke 1.2 in die Bereitschaftsstellung verschwenkt.

Die Aufnahmezunge 11 der Stapelklinke 1, 1.1, 1.2 weist ein Positionierblech 12 auf, welches von der Aufnahmezunge 11 der Stapelklinke 1, 1.1, 1.2 hin zu der funktionell weiteren Stapelklinke 1, 1.1, 1.2 hinweist. Das Positionierblech 12 ragt dabei in Bereitschaftsstellung und/oder Arbeitsstellung aus den beiden Seitenwangen 3, 4 der Stapelsäule S auf der Aufnahmezunge 11 der Stapelklinke 1, 1.1, 1.2 heraus.

Das Positionierblech 12 kann auf der Aufnahmezunge 11 der Stapelklinke 1, 1.1, 1.2 hin zu dem Führungskorb 10 hingeneigt angeordnet sein. Das Positionierblech 12 kann auf der Aufnahmezunge 11 jedoch auch von dem Führungskorb 10 weggeneigt angeordnet sein oder aber auf der Aufnahmezunge 11 rechtwinklig angeordnet sein.

Das Positionierblech 12 bildet einen Verbindungsstreifen 13 zu dem Führungskorb 10 aus, wobei der Verbindungsstreifen 13 in dem Führungskorb 10 mit der Stapelklinke 1, 1.1, 1.2 vernietet, verschraubt oder verschweißt ist. Andere Verbindungen sind denkbar, jedoch in der Regel nicht praktikabel.

Der Verbindungsstreifen 13 und/oder das Positionierblech 12 weisen eine einzige Nietausnehmung 14 aufweisen. Das bedeutet, dass entweder der Verbindungsstreifen 13 oder das Positionierblech 12 die Nietausnehmung 14 aufweist. Vorzugsweise jedoch ist die Nietausnehmung 14 in einem Übergangsbereich zwischen dem Verbindungsstreifen 13 und dem Positionierblech 12 angeordnet. Vorteilhaft bei dieser Ausgestaltung ist, dass ein Niet 26, welcher den Verbindungsstreifen 13 des Positionierblechs 12 in dem Führungskorb 10 der Stapelklinke 1.1 vernietet, in diese Nietausnehmung 14 einfahren kann, wenn die Stapelklinken 1, 1.1, 1.2 in Ruhestellung sind. Auf dieser Weise können die Stapelklinken 1, 1.1, 1.2 eine geringere Beabstandung zueinander aufweisen.

Das Positionierblech 12 weist weiterhin eine erste Breite auf, die größer ist, als eine zweite Breite der Aufnahmezunge 11, wobei das Positionierblech 12 zwei die Aufnahmezunge 11 flankierende Justagefinger 15 weg von der funktionell weiteren Stapelklinke 1, 1.1, 1.2 ausbildet.

Die Seitenwange 4 weist einen Führungswinkel 16 auf, welches in einem rechten Winkel von der Seitenwange 4 abragt. Das Positionierblech 12 der Aufnahmezunge 11 der Stapelklinken 1, 1.1, 1.2 ragt in Bereitschaftsstellung und/oder Arbeitsstellung über eine Längserstreckung dieses Führungswinkels 16 heraus. Das Positionierblech 12 dient damit vorteilhaft als Begrenzung für das auf der Stapelklinke 1, 1.1, 1.2 anzuordnendes Lagerteil 25.

### Bezugszeichenliste

| | |
|---|---|
| 1 | Stapelklinke |
| 2 | Grundkörper |
| 3 | Seitenwange |
| 4 | Seitenwange |
| 5 | Rückwand |
| 6 | Achsbolzen |
| 7 | Gestängebolzen |
| 8 | Bogen-Langloch |
| 9 | Bohrung |
| 10 | Führungskorb |
| 11 | Aufnahmezunge |
| 12 | Positionierblech |
| 13 | Verbindungsstreifen |
| 14 | Nietausnehmung |
| 15 | Justagefinger |
| 16 | Führungswinkel |
| 17 | Rückstellfeder |
| 18 | erstes Federbein |
| 19 | zweites Federbein |
| 20 | Bodenbereich |
| 21 | Flügel |
| 22 | Achsbolzen-Bohrung |
| 23 | Gestängebolzen-Bohrung |
| 24 | Gestänge |
| 25 | |
| 26 | |
| 27 | |
| 28 | |
| 29 | |
| 30 | |
| 31 | |
| 32 | |
| S | Stapelsäule |

## Patentansprüche

1. Stapelsäule zur Aufnahme von Lagerteilen auf einer Stapelklinke (1),
- wobei ein Grundkörper (2) aus zwei Seitenwangen (3, 4) besteht, die über eine Rückwand (5) miteinander verbunden sind,
- wobei die beiden Seitenwangen (3, 4) mit der Rückwand (5) eine Rinnenform ausbilden,
- wobei zwischen den beiden Seitenwangen (3, 4) in der Rinnenform die Stapelklinken (1, 1.1, 1.2) übereinander schwenkbar angeordnet sind,
- wobei jeder der Stapelklinken (1, 1.1, 1.2) jeweils ein Achsbolzen (6) und ein Gestängebolzen (7) zugeordnet ist,
- wobei der Gestängebolzen (7) innerhalb zweier Bogen-Langlöcher (8) beweglich geführt ist,
- wobei die Bogen-Langlöcher (8) jeweils in eine der Seitenwangen (4) eingelassen sind,
- und der Achsbolzen (6) zwischen den beiden Seitenwangen (3, 4) und in Bohrungen (9) der Seitenwangen (3, 4) drehbar gelagert ist,
- wobei jede der Stapelklinken (1, 1.1, 1.2) aus einem Führungskorb (10) und einer Aufnahmezunge (11) besteht,
**dadurch gekennzeichnet, dass**
die Aufnahmezunge (11) ein Positionierblech (12) aufweist, welches von der Aufnahmezuge (11) der Stapelklinke (1, 1.1, 1.2) hin zu der funktionell weiteren Stapelklinke (1, 1.1, 1.2) hinweist, wobei das Positionierblech (12) in Bereitschaftsstellung und/oder Arbeitsstellung aus den beiden Seitenwangen (3, 4) auf der Aufnahmezunge (11) herausragt.

2. Stapelsäule nach Anspruch 1, **dadurch gekennzeichnet, dass** das Positionierblech (12) auf der Aufnahmezunge (11) hin zu dem Führungskorb (10) hingeneigt angeordnet ist.

3. Stapelsäule nach Anspruch 1 oder 2, **dadurch gekennzeichnet, dass** das Positionierblech (12) auf der Aufnahmezunge (11) von dem Führungskorb (10) weggeneigt angeordnet ist.

4. Stapelsäule nach einem der vorigen Ansprüche, **dadurch gekennzeichnet, dass** das Positionierblech (12) auf der Aufnahmezunge (11) rechtwinklig angeordnet ist.

5. Stapelsäule nach einem der vorigen Ansprüche, **dadurch gekennzeichnet, dass** das Positionierblech (12) einen Verbindungsstreifen (13) zu dem Führungskorb (10) ausbildet.

6. Stapelklinke nach Anspruch 5, **dadurch gekennzeichnet, dass** der Verbindungsstreifen (13) in dem Führungskorb (10) mit der Stapelklinke (1, 1.1, 1.2) vernietet, verschraubt oder verschweisst ist.

7. Stapelklinke nach Anspruch 5 oder 6, **dadurch gekennzeichnet, dass** der Verbindungsstreifen (13) und/oder das Positionierblech (12) eine einzige Nietausnehmung (14) aufweisen.

8. Stapelklinke nach einem der vorigen Ansprüche, **dadurch gekennzeichnet, dass** das Positionierblech (12) eine erste Breite aufweist die größer ist, als eine zweite Breite der Aufnahmezunge (11), wobei das Positionierblech (12) zwei die Aufnahmezunge (11) flankierende Justagefinger (15) weg von der funktionell weiteren Stapelklinke (1, 1.1, 1.2) ausbildet.

9. Stapelklinke nach einem der vorigen Ansprüche, **dadurch gekennzeichnet, dass** zumindest eine der Seitenwangen (3, 4) einen Führungswinkel (16) aufweist, wobei der Führungswinkel (16) in einem rechten Winkel von der zumindest einen Seitenwange (3, 4) abragt, wobei das Positionierblech (12) der Aufnahmezunge (11) in Bereitschaftsstellung und/oder Arbeitsstellung über eine Längserstreckung des Führungswinkels (16) herausragt.

10. Stapelklinke nach einem der vorigen Ansprüche, **dadurch gekennzeichnet, dass** um den Achsbolzen (6) eine Rückstellfeder (17) angeordnet ist, deren erstes Federbein (18) gegen die Rückwand (5) drückt und deren zweites Federbein (19) den Gestängebolzen (7) zu einer Ruhestellung hindrückend angeordnet ist.

11. Stapelsäule nach einem der vorigen Ansprüche, **dadurch gekennzeichnet, dass** der Führungskorb (10) aus einem Bodenbereich (20) und zwei rechtwinklig angeordneten Flügeln (21) besteht, wobei die Flügel (21) jeweils eine Achsbolzen-Bohrung (22) und eine Gestängebolzen-Bohrung (23) aufweisen.

12. Stapelsäule nach einem der vorigen Ansprüche, dass die Stapelklinken (1, 1.1, 1.2) miteinander an dem Gestängebolzen (7) angreifend über ein Gestänge (24) wirkverbunden sind.
